# EUROPEAN PATENT APPLICATION

(11) **EP 3 229 083 A1**
(43) Date of publication of application: **11.10.2017**
(21) Application number: 17162970.2
(22) Date of filing: 27.03.2017
(51) Int. Cl.: G05B 15/02, G05B 23/02

(54) **FAULT PROPAGATION IN A BUILDING AUTOMATION SYSTEM**

(30) Priority: 04.04.2016 US 201615090345
(71) Applicant: Honeywell International Inc., Morris Plains, NJ 07950 (US)
(72) Inventor: DIBOWSKI, Henrik, Morris Plains, NJ 07950 (US); HOLUB, Ondrej, Morris Plains, NJ 07950 (US); ROJICEK, Jiri, Morris Plains, NJ 07950 (US)
(74) Representative: Houghton, Mark Phillip

(57) **Abstract**

Methods, devices, and systems for fault propagation in a building automation system (102) are described herein. One device includes a memory (334), and a processor (332) configured to execute executable instructions stored in the memory (334) to receive an input associated with a fault occurring in the building automation system (102), execute a fault propagation of the fault using fault rules (104) for the building automation system (102) and causality relationships (108) in a building information model (106) associated with the building automation system (102), and generate, using the fault propagation of the fault, a fault output (112) with respect to the building automation system (102).

## Description

### Technical Field

The present disclosure relates to methods, devices, and systems for fault propagation in a building automation system.

### Background

Building automation systems can be complex distributed systems. For example, a building automation system can include many different pieces of equipment, and can also include system variables associated with the building automation system. As a specific example, a building automation system can include different pieces of heating, ventilation, and air-conditioning (HVAC) equipment as well as other equipment such as sensors, operating panels, controllers, actuators, etc. Additionally, system variables can include various variables relating to the building and building automation system, including different pieces of HVAC equipment.

Detecting faults within a building automation system to maintain functionality of the building automation system can be important to provide a comfortable environment for occupants of a zone serviced by the building automation system, to prevent the building automation from further damage resulting from a detected fault, and/or to avoid inefficient operation of the building automation system which may result in higher energy consumption. For example, occupant comfort in a building serviced by a building automation system can be a direct result of the functionality of the building automation system, and occupant comfort may be quickly lost in the event a component of the building automation system, such as the equipment and/or a control strategy, fails.

Fault detection and diagnosis can help quickly determine faults of a building automation system. For example, fault detection and diagnosis can help a user of the building automation system, such as an engineer, building manager, or other service personnel, and/or a system (e.g., a building management system) to quickly detect and schedule repairs of faults in a building automation system.

### Brief Description of the Drawings

Figure 1 is an example system for fault propagation in a building automation system, in accordance with one or more embodiments of the present disclosure.
Figure 2 is a schematic block diagram of equipment for fault propagation in a building automation system, in accordance with one or more embodiments of the present disclosure.
Figure 3 is a schematic block diagram of a computing device for fault propagation in a building automation system, in accordance with one or more embodiments of the present disclosure.

### Detailed Description

Methods, devices, and systems for fault propagation in a building automation system are described herein. For example, one or more embodiments include a memory, and a processor configured to execute executable instructions stored in the memory to receive an input associated with a fault occurring in the building automation system, execute a fault propagation of the fault using fault rules for the building automation system and causality relationships in a building information model associated with the building automation system, and generate, using the fault propagation of the fault, a fault output with respect to the building automation system.

Fault detection and diagnosis can help a user and/or a system (e.g., a building management system) identify a fault that has occurred in a building automation system. For example, a fault in a piece of HVAC equipment and/or a fault in a control strategy can be determined, and the fault can be serviced (e.g., repaired) by an engineer, building manager, or other service personnel.

However, fault detection and diagnosis may not be able to determine consequences of a fault in a piece of HVAC equipment on other equipment associated with the building automation system. In some examples, a fault in a piece of HVAC equipment or in a control strategy may propagate to other equipment or control strategies, for example, affecting downstream equipment. In some examples, a fault in a piece of equipment or a fault in a control strategy may not propagate to other equipment or control strategies.

Additionally, fault detection and diagnosis may not be able to determine, based on abnormal behavior occurring in a building automation system, a root cause of the abnormal behavior. For example, a zone may become too cold for a number of different reasons (e.g., a radiator has stopped working, a valve of a cooling coil of an AHU is stuck open, a radiator valve is stuck shut, a hot water pump has stopped working, and/or a boiler has stopped working, etc.) Fault detection and diagnosis may not be able to determine the root cause of the abnormal behavior of the zone being too cold.

Understanding consequences of a fault in a piece of equipment and/or in a control strategy, as well as determining the root cause of abnormal behavior occurring in the building automation system, can assist in determining proper reactions to a fault. For example, a fault in a piece of equipment or a control strategy may require repair, configuration, or replacement of upstream equipment. However, a user may need intricate knowledge of the building automation system in order to determine how to efficiently react to a fault.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing.

As used herein, "a" or "a number of" something can refer to one or more such things. For example, "a number of root causes" can refer to one or more root causes.

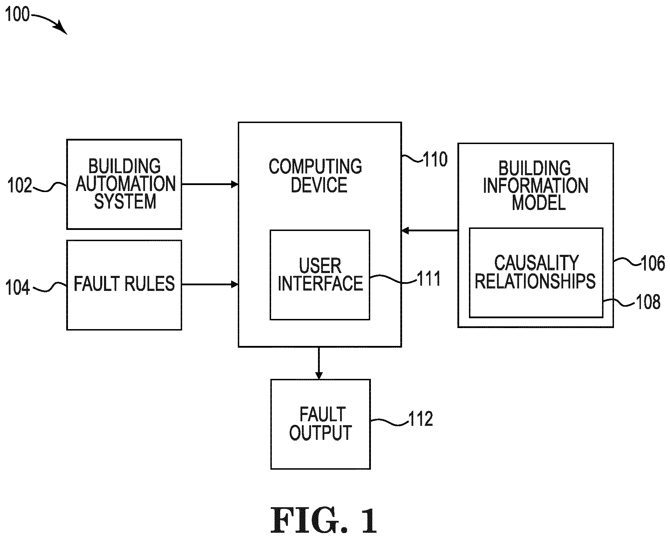

Figure 1 is a system for fault propagation in a building automation system, in accordance with one or more embodiments of the present disclosure. As shown in Figure 1, the system 100 can include a building automation system 102, a computing device 110, a building information model 106, fault rules 104, and a fault output 112. Building information model 106 can include causality relationships 108. Computing device 110 can include a user interface 111.

Computing device 110 can receive an input associated with a fault occurring in building automation system 102. The input associated with the fault can be received by computing device 110 from a user and/or from building automation system 102. As used herein, a user can be a person associated with building automation system 102. For example, a user can be an engineer, a building manager, and/or other service personnel, etc.

As used herein, a building automation system refers to a system of equipment that can include central equipment and decentralized equipment. The building automation system can include system variables that can include various variables relating to the different centralized and decentralized equipment, or to rooms and/or zones of a building. In some examples, the central equipment can include different plants such as boilers, chillers, air handling units (AHU's), rooftop units (RTU's), and/or variable air volume (VAV) systems and control devices, etc. In some examples, the decentralized equipment can include sensors, operating panels, controllers, actuators, fans, pumps, valves, and/or radiators, etc. In some examples, the system variables can include zone air temperatures, hot water supply mass flows, fan speeds, radiator valve positions, etc.

Although sensors, operating panels, controllers, actuators, fans, pumps, valves, and/or radiators are described as being decentralized equipment, embodiments of the disclosure are not so limited. For example, sensors, operating panels, controllers, actuators, fans, pumps, valves, and/or radiators can be a part of and/or components of central equipment.

Although system variables are described as including zone air temperatures, hot water supply mass flows, fan speeds, radiator valve positions, embodiments of the disclosure are not so limited. For example, system variables can include other variables relating to the centralized and/or decentralized equipment, or to the rooms and/or zones of a building.

As used herein, a fault can include an event that occurs to cause a piece of equipment or control strategy to function improperly or to cause abnormal behavior in a building, or a zone of the building, serviced by building automation system 102. In some examples, a fault can include a piece of equipment breaking down. In some examples, a fault can include a component of a piece of equipment ceasing to function correctly. In some examples, a fault can include abnormal behavior of a piece of equipment and/or a zone.

Although a fault is described as including equipment breakdowns and abnormal behavior, embodiments of the disclosure are not so limited. For example, faults can include any other event that causes equipment or control strategies to function improperly, and/or causes abnormal behavior to occur in a building serviced by building automation system 102.

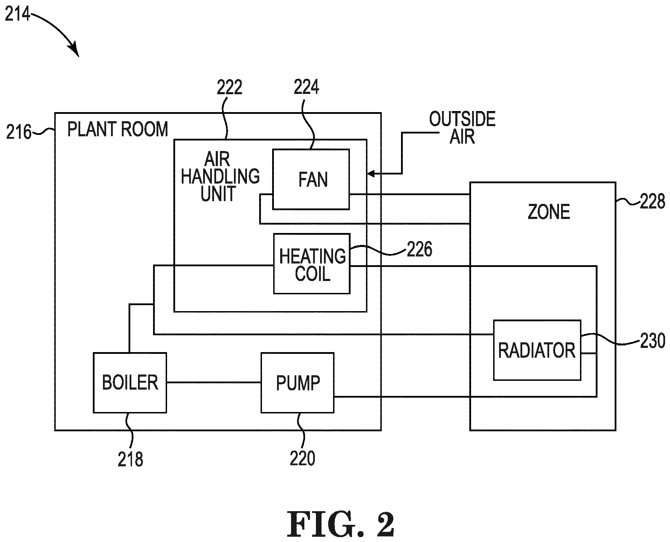

In some embodiments, the input associated with the fault can include an observation of abnormal behavior occurring in building automation system 102 received by computing device 110 from a user. For example, the user may observe that a zone to be heated by building automation system 102 is colder than a set point temperature for the zone. The user may realize that the temperature in the zone is too cold (e.g., 62° F), which may be abnormal behavior for a room with a temperature setpoint that should be higher (e.g., 72° F). The observation of abnormal behavior can be received from the user by computing device 110 via user interface 111, and computing device 110 can execute fault propagation (e.g., backward fault propagation) to determine root causes of the abnormal behavior in the zone, as will be further described herein (e.g., in connection with Figure 2).

In some embodiments, the input associated with the fault can include an observation of abnormal behavior occurring in building automation system 102 received by computing device 110 from building automation system 102. In some examples, computing device 110 can determine, using fault detection and diagnosis (FDD) algorithms, abnormal behavior occurring in building automation system 102. For example, a temperature sensor of building automation system 102 in a zone to be heated by building automation system 102 may indicate a temperature of the zone to be 62° F. Computing device 110 can determine that the zone is colder (e.g., 62° F) than a set point temperature (e.g., 72° F) for the zone. The observation of abnormal behavior can be received from building automation system 102 via an application programming interface (API), or via a wired or wireless network, and computing device 110 can execute fault propagation (e.g., backward fault propagation) to determine root causes of the abnormal behavior in the zone, as will be further described herein (e.g., in connection with Figure 2).

The wired or wireless network can be a network relationship that connects building automation system 102 to computing device 110. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, and/or the Internet, among other types of network relationships.

In some embodiments, the input associated with the fault can include a fault associated with building automation system 102 received by computing device 110 from a user. The fault can, for instance, be a fault of equipment associated with building automation system 102. For example, the user may determine that a boiler, or a component of the boiler (e.g., a burner, valve, controller, etc.) has suffered a fault. The fault of equipment associated with building automation system 102 can be received from the user by computing device 110 via user interface 111, and computing device 110 can execute fault propagation (e.g., forward fault propagation) to determine effects of the fault on the rest of building automation system 102, as will be further described herein (e.g., in connection with Figure 2).

In some embodiments, the input associated with the fault can include a fault associated with building automation system 102 received by computing device 110 from building automation system 102. The fault can, for instance, be a fault of equipment associated with building automation system 102. For example, a pressure sensor of a boiler associated with building automation system 102 may indicate pressures too low for the boiler to be functioning properly. The fault of equipment can be received from building automation system 102 via an application programming interface (API), or via a wired or wireless network, and computing device 110 can execute fault propagation (e.g., forward fault propagation) to determine effects of the fault on the rest of building automation system 102, as will be further described herein.

Computing device 110 can execute a fault propagation of the fault using fault rules 104 for building automation system 102, causality relationships 108, and building information model 106 that is associated with building automation system 102. Fault propagation can be used to quickly determine possible root causes of abnormal behavior in building automation system 102, and/or to identify effects of a fault on the rest of the building automation system 102, as will be further described herein.

As used herein, a building information model can include building information modeling data associated with a building managed by building automation system 102. The building information modeling data can include data associated with (e.g., quantities, properties, and/or statuses of) the components (e.g., control components), equipment, devices, networks (e.g., control networks), areas, spaces, zones, and/or properties of the building. For example, the building information modeling data can include architectural, mechanical, electrical, plumbing, sanitary, fire, geometrical, and/or spatial (e.g., spatial relationship) information associated with the building.

For example, building information model 106 can include a floor plan (e.g., an architectural layout, such as an area, floor and/or room layout) of the building and HVAC devices (e.g., HVAC equipment) in (e.g., located and/or used in) the building, among other types of building information modeling data. The HVAC devices in the building can include, for example, a chiller(s) (e.g., chiller plant), boiler(s) (e.g., boiler plant), pump(s), fan(s), air damper(s) such as a variable air volume (VAV) damper, air handling unit(s) (AHUs) (e.g., AHU plant), coil(s) such as a heating and/or cooling coil, air filter(s), and/or cooling tower(s), among other HVAC devices.

In some embodiments, building information model 106 and/or causality relationships 108 can include and/or be represented by various ontologies. As used herein, ontologies can refer to definitions of types, properties, and interrelationships of entities that exist for a particular domain. For instance, ontologies can refer to definitions of types, properties, and interrelationships of equipment and/or system variables in a building information model. For example, building information model 106 can include various types (e.g., HVAC equipment, air ducts, rooms, zones, walls, windows), with various properties (e.g., size, quantity, identifier, name, manufacturer, thermal resistance, etc.), and interrelationships (e.g., location, structure, energy flow, mass flow, signal flow, control flow, wiring) defined.

In some embodiments, building information model 106 and/or causality relationships 108 can include (e.g., be formalized by) a semantic web language. For example, building information model 106 and/or causality relationships 108 can include the semantic web language to express knowledge, axioms, constraints, and/or rules defined by the various ontologies included in building information model 106.

In some embodiments, fault rules 104 for building automation system 102 can be formalized by a rule language (e.g., a semantic web rule language) or query language (e.g., SPARQL). Fault rules 104 can be executed on building information model 106 and causality relationships 108 by a reasoner or query engine.

Causality relationships 108 can define relationships between equipment associated with building automation system 102 and/or system variables associated with building automation system 102. The relationships between equipment associated with building automation system 102 and/or system variables can be physical relationships and/or logical relationships. For example, causality relationships 108 in building information model 106 can include physical and/or logical correlations between physical equipment and/or system variables associated with the physical equipment in a building based on, for instance, location, structure, energy flow, mass flow, signal flow, control flow, wiring, etc.

Causality relationships 108 can include directed relationships between corresponding equipment and/or system variables. For example, an air temperature of a zone can be affected by several variables, including, but not limited to, heat gain of a radiator supplying heat to the zone, supply air temperature to the zone, mass flow of the supply air to the zone supplied by an AHU, air temperature of neighboring zones, and/or air temperature of outside air (e.g., heat loss/input through windows and/or walls), etc. Causality relationships 108 can define the relationships of the zone air temperature to these and other variables.

Causality relationships 108 can be generated utilizing equipment associated with building automation system 102 and/or system variables associated with building automation system 102 and building information model 106. For example, ontologies included in building information model 106, including the types, properties, and interrelationships of equipment and/or system variables included in building information model 106, a semantic web language able to express knowledge, axioms, constraints, and/or rules included in building information model 106, and/or fault rules 104 can be utilized to determine causality relationships 108.

Fault rules can be generic for different building automation systems. Fault rules can be expert knowledge formalized by a rule language or a query language, and therefore reusable. Fault rules can generally be applied to any building automation system that includes an associated building information model as long as the building information model 106 is represented as an ontology. If building information model 106 is not represented as an ontology, the building information model 106 may need to be converted to be represented as an ontology.

Fault rules 104 can define a propagation path of a fault among equipment and/or system variables associated with building automation system 102. For example, faults (e.g., faulty states) of equipment associated with building automation system 102 (e.g., broken boiler, impaired fan, stuck heating coil valve of an AHU, etc.) can manifest in faulty states of corresponding variables and can propagate along the causality relationships 108 to affect other system variables (e.g., data related to the same or other equipment and/or control strategies). In some examples, an unheated supply water temperature from a broken boiler can affect a supply air temperature of an AHU downstream of the boiler (e.g., the AHU cannot heat the supply air), causing the supply air temperature from the AHU to be low, and preventing the zone from being heated by the supply air.

Faults in system variables can manifest into faults of corresponding equipment. For example, a faulty control strategy such as a hot water mass flow that is too high (e.g., caused by a control strategy fault of a hot water pump) can cause degradation of downstream heating coil valves of AHU's and radiator valves.

Executing a fault propagation of the fault using causality relationships 108 and fault rules 104 can include propagating the fault by the ontology included in building information model 106 that defines the various types, properties, and interrelationships of equipment associated with building automation system 102. For example, propagating the fault can include utilizing the ontologies and the semantic web language to execute rules and logic or queries to determine the root causes of the fault or the effects of the fault on other equipment associated with building automation system 102, as will be further described in connection with Figure 2.

Computing device 110 can generate, using the fault propagation of the fault, fault output 112 with respect to building automation system 102. For example, fault output 112 can be a result of the fault propagation of the fault.

Fault output 112 can be provided by computing device 110 to other systems. For example, fault output 112 can be provided to maintenance systems, scheduling systems, and/or other building automation and/or management systems, although embodiments of the disclosure are not so limited to the above listed systems. Additionally, fault output 112 can be provided to a user via user interface 111. The user interface 111 can include a display of the fault output 112, as will be further described in connection with Figure 2.

Fault output 112 can include a root cause of the fault. For example, in response to an observation of abnormal behavior by a user or by building automation system 102 (e.g., a zone that is colder than the set point temperature of the zone minus a threshold), computing device 110 can propagate the fault (e.g., the observation of abnormal behavior) to determine a root cause of the abnormal behavior (e.g., a boiler is malfunctioning and is not providing heat to an AHU that supplies air to the zone). The root cause of the fault can include an event and/or a piece of equipment that caused the abnormal behavior.

Fault output 112 can include effects of the fault on the building automation system 102. For example, in response to a fault of equipment by a user or by building automation system 102 (e.g., a boiler that has suffered a fault), computing device 110 can propagate the fault (e.g., the boiler fault) to determine the effects of the boiler fault on the building automation system 102 (e.g., a supply water of the boiler may not be heated by the boiler, which in turn may not be able to heat a supply air of an AHU, where the supply air of the AHU may in turn not be able to heat the zone).

Computing device 110 can send an alert including fault output 112 to a user. For example, computing device 110 can send an alert including fault output 112 to a mobile device of the user. The user can, in response to receiving the alert including fault output 112, take a number of different actions, as will be further described in connection with Figure 2.

Fault propagation in a building automation system can allow a user and/or a system (e.g., a building management system) to quickly identify and determine root causes of abnormal behavior in a building automation system using fault rules, causality relationships, and a building information model associated with a building automation system. The fault rules can be generic and applied to any building automation system that includes an associated building information model, allowing for broad applications to different buildings without the need for defining new fault rules for each building.

Fault propagation in a building automation system can allow for quick identification of effects of a fault on the rest of the building automation system. Using this knowledge, a user, such as an engineer, building manager, or other service personnel, can quickly schedule maintenance of equipment, prioritize maintenance scheduling, determine whether emergency actions may need to be taken, calculate energy usage, and/or plan energy saving strategies. Additionally, a user can apply fault propagation to a different building that includes a building automation system with an associated building information model.

Figure 2 is a schematic block diagram 214 of equipment for fault propagation in a building automation system, in accordance with one or more embodiments of the present disclosure. As shown in Figure 2, plant room 216 can include a boiler 218, a pump 220, and an air handling unit (AHU) 222. AHU 222 can include a fan 224 and a heating coil 226. Zone 228 can include a radiator 230.

As previously described in connection with Figure 1, a computing device (e.g., computing device 110) can receive an input associated with a fault occurring in building automation systems (e.g., building automation system 102) and execute a fault propagation of the fault using causality relationships (e.g., causality relationships 108) associated with equipment of the building automation systems and fault rules (e.g., fault rules 104) for building automation systems, where fault rules may be applied to any building automation system with an associated building information model, and where the causality relationships are included in a building information model (e.g., building information model 106) associated with the building automation system. The fault propagation can be, for example, backward fault propagation. Using the backward fault propagation, the computing device can generate a number of root causes of the fault.

As shown in Figure 2, zone 228 can include radiator 230. A user may observe abnormal behavior in zone 228 that may include a temperature of zone 228 that is too low (e.g., the zone air temperature of zone 228 is lower than a set point for the zone air temperature of zone 228 minus a threshold). A computing device can execute fault propagation to determine a number of root causes of the zone air temperature of zone 228 being too low (e.g., the abnormal behavior).

Generating the number of root causes of the fault can include eliminating potential faults among a number of faults using the fault rules for the building automation system. For example, generating the number of root causes of the fault can include moving backward through fault rules, eliminating potential faults causing the abnormal behavior, and deducing a list of other possible faults (e.g., possible causes) of the abnormal behavior by moving backward through other additional fault rules.

For example, the zone air temperature of zone 228 may be too low. The computing device may receive the input regarding the abnormal behavior of the zone air temperature of zone 228 from a user or from the building automation system, as previously described in connection with Figure 1.

The computing device may use the fault rules to eliminate potential faults to find the root cause of the zone air temperature of zone 228 being too low. The computing device may determine a number of potential root causes of the fault. For example, a number of potential root causes of the fault may include no heat gain by radiator 230, no or limited heating to air supply from AHU 222, no supply air mass flow from AHU 222, a very low outside air temperature, and/or windows in zone 228 may be open, among other potential root causes.

The computing device may determine that the supply air from AHU 222 meets a temperature setpoint of zone 228, the outside air temperature is not very low, and/or that no windows are open by reading measurements of corresponding supply air temperature sensor(s) and outside air temperature sensor(s), as well as window contacts. As a consequence, the computing device may conclude that the zone air temperature of zone 228 is not too low due to the no or limited heating to air supply from AHU 222, no supply air mass flow from AHU 222, a very low outside air temperature, and/or windows in zone 228 being open. The computing device may then conclude that the zone air temperature of zone 228 is too low due to no heat gain by radiator 230.

The computing device may then determine the root cause of the no heat gain by radiator 230. For example, the computing device may determine the root cause of the no heat gain by radiator 230 may be caused by unheated supply water from boiler 218 and/or no supply water mass flow from pump 220, among other potential root causes.

Based on fault rules and the building information model, the computing device may determine, based on AHU 222 supplying properly heated supply air, that there is heated water supply from boiler 218 and there is supply water mass flow from pump 220, and consequently, eliminating these potential root causes. Optionally, the computing device may validate this determination by checking measurements of the corresponding supply water temperature sensor and supply water mass flow sensor, if these sensors and/or measurements are available. The computing device may then determine radiator 230 may have a valve stuck closed, and/or a valve controller is broken, among other potential root causes.

The computing device may determine the valve controller is working. By eliminating other related causes, a remaining potential root cause may be that a valve of radiator 230 is stuck closed. The computing device can then deduce (e.g., by deduction by elimination), that the root cause may be a valve of the radiator being stuck closed. If a valve position measuring instrument is available, the computing device may validate this determination, or otherwise notify a user to check and/or fix the valve.

Hence, the computing device may determine, using causality relationships and moving backward through fault rules, the root cause of the zone air temperature of zone 228 being too low to be a valve of the radiator being stuck closed, preventing mass flow of heated supply water from the boiler 218 and the pump 220 to enter the radiator to heat zone 228.

Although determining the root cause of a fault is described as being a stuck radiator valve, embodiments of the disclosure are not so limited. For example, the computing device may determine, using fault propagation, a root cause of a fault to be a broken fan 224 of AHU 222, a broken sensor of boiler 218, and/or a broken pump 220 and/or a controller of the pump 220, among other root causes of various faults of a building automation system.

Once a root cause or a number of root causes of a fault is determined, the computing device can send an alert including the root cause or the number of root causes of the fault. For example, a user such as an engineer, building manager, or other service personnel can receive the alert, for example at a mobile device of the user, which includes the root cause or the number of root causes of the fault.

A user can utilize the alert including a root cause of a fault in many ways. In some embodiments, a user can create a checklist of equipment to be checked to fix a fault. In some embodiments, a user can schedule maintenance of equipment associated with the building automation system. In some embodiments, a user can prioritize various maintenance items based on a severity of the fault.

As previously described in connection with Figure 1, a computing device can receive an input associated with a fault occurring in a building automation system, and execute a fault propagation of the fault using a building information model with causality relationships associated with the building automation system and fault rules for building automation systems. The fault propagation can be, for example, forward fault propagation. Using the forward fault propagation, the computing device can generate a number of effects of the fault on the building automation system.

A user may observe a fault with boiler 218 in plant room 216 that may include boiler 218 being broken down in some way. The computing device can execute fault propagation to determine a number of effects the broken boiler (e.g., the fault) can have on the rest of the building automation system.

Generating the number of effects of a fault can include deriving consequences of the fault on the building automation system and/or on equipment associated with the building automation system using causality relationships in the building information model. For example, the computing device can determine a list of possible effects on the building automation system caused by the fault. The computing device can utilize the fault and move forwards through the causality relationships using the fault rules, and determine a list of possible effects the fault may cause on the building automation system.

For example, it may be determined that boiler 218 has a fault (e.g., it is broken). The computing device may receive the input regarding the boiler fault from a user or from the building automation system, as previously described in connection with Figure 1.

The computing device may use a building information model, causality relationships, and fault rules to determine a list of possible effects on the building automation system caused by the boiler fault. The computing device may determine based on a boiler fault, there may be unheated supply water to heating coil 226 of AHU 222 and/or to radiator 230 of zone 228.

As a result of unheated supply water to heating coil 226, air moving through AHU 222 may not be heated and therefore there may be no proper temperature control of the supply air from AHU 222. As a result of unheated supply water to radiator 230, there may be no heat gain at radiator 230 and no proper control of radiator 230 heat gain. The result of both of these scenarios may lead to the zone air temperature of zone 228 being lower than a temperature set point of zone 228, if zone 228 is in need of heating.

Determining a number of effects of a fault can include, in addition to inevitable fault consequences (e.g., a broken boiler), possible fault consequences (e.g., consequences that might occur, but may not). For example, a fault may include boiler 218 being degraded but not broken. As a result of boiler 218 being degraded, boiler 218 may be able to partially heat its transport media (e.g., water). For instance, supply water to radiator 230 may not be heated to a required temperature. The lower temperature supply water to radiator 230 may result in zone 228 being heated, but not to the set point temperature.

Generating the number of effects of a fault can include eliminating conflicting faults by prioritizing different possible fault states of equipment and/or system variables associated with the equipment. For example, the number of effects derived from a fault may include disjointed fault states such as an unheated supply water to radiator 230 and limited heating supply water to radiator 230. However, since the fault is disjointed (e.g., the unheated supply water to radiator 230 and limited heating supply water to radiator 230 cannot occur at the same time), the conflict has to be resolved.

In some embodiments, the disjointed fault can be resolved by assigning priorities to each of the disjointed fault states. For example, the unheated water supply to radiator 230 can be assigned a higher priority than the limited heating supply water to radiator 230. Based on the unheated water supply to radiator 230 having a higher priority than the limited heating supply water to radiator 230, the limited heating supply water to radiator 230 can be eliminated.

In some embodiments, the disjointed fault can be resolved by assigning a certainty to each of the disjointed fault states. For instance, fault states that were derived as possible fault consequences can be eliminated over inevitable fault consequences. For example, a hot water mass flow that is too low can be an inevitable fault consequence, while a hot water mass flow that is too high can be a possible fault consequence. The hot water mass flow that is too high can be eliminated based on it being a possible fault consequence.

Once a number of effects of a fault on the building automation system and/or on equipment associated with the building automation system are determined, the computing device can send an alert including effects of a fault on the building automation system and/or on equipment associated with the building automation system. For example, a user such as an engineer, building manager, or other service personnel can receive an alert, for example at a mobile device of the user, which includes the effects of a fault on the building automation system and/or on equipment associated with the building automation system.

A user can utilize the alert including the effects of a fault in many ways. In some embodiments, a user can schedule maintenance of equipment associated with the building automation system and/or prioritize maintenance actions based on a severity of effects of a fault. In some embodiments, a user can develop zone occupancy planning schedules based on factors including whether the zone is currently being heated or cooled, whether maintenance is occurring in the zone, and/or other factors. In some embodiments, a user can develop occupant comfort settings of a zone.

A user interface (e.g., user interface 111, previously described in connection with Figure 1) of the computing device can display a fault output (e.g., fault output 112, previously described in connection with Figure 1) that can include the number of effects of a fault on the building automation system and/or the number of root causes of the fault. For example, the computing device may include a display of the fault output that may include current and/or fault related measurements of sensors (e.g., temperatures, pressures, mass flow rates, set points, etc.) associated with equipment of the building automation system that may be affected by the fault, trends of sensor measurements for a specified time period (e.g., past minute, hour, number of hours, days, months, etc.) The display of the fault output can be updated in real time.

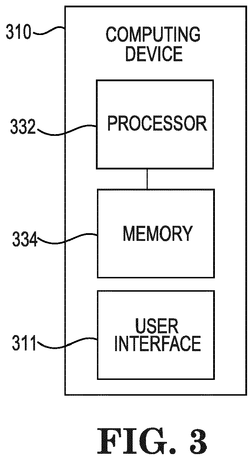

Figure 3 is a schematic block diagram of a computing device for fault propagation in a building automation system, in accordance with one or more embodiments of the present disclosure. As shown in Figure 3, the computing device can include a processor 332, a memory 334, and a user interface 311.

The memory 334 can be any type of storage medium that can be accessed by the processor 332 to perform various examples of the present disclosure. For example, the memory 334 can be a non-transitory computer readable medium having computer readable instructions (e.g., computer program instructions) stored thereon that are executable by the processor 332 for fault propagation in a building automation system in accordance with the present disclosure.

The memory 334 can be volatile or nonvolatile memory. The memory 334 can also be removable (e.g., portable) memory, or non-removable (e.g., internal) memory. For example, the memory 334 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 334 is illustrated as being located within computing device 310, embodiments of the present disclosure are not so limited. For example, memory 334 can also be located internal to another computing resource (e.g., enabling computer readable instructions to be downloaded over the Internet or another wired or wireless connection).

As shown in Figure 3, computing device 310 includes a user interface 311. A user (e.g., an operator, such as an engineer, building manager, or other service personnel) of computing device 310 can interact with computing device 310 via user interface 311. For example, user interface 311 can provide (e.g., display and/or present) information to the user of computing device 310, and/or receive information from (e.g., input by) the user of computing device 310. For instance, in some embodiments, user interface 311 can be a graphical user interface (GUI) that can include a display (e.g., a screen) that can provide and/or receive information to and/or from the user of computing device 310. The display can be, for instance, a touch-screen (e.g., the GUI can include touch-screen capabilities). Alternatively, a display can include a television, computer monitor, mobile device screen, or other type of display device connected to computing device 310 and configured to receive a video signal output from the computing device 310.

As an additional example, user interface 311 can include a keyboard and/or mouse the user can use to input information into computing device 310. Embodiments of the present disclosure, however, are not limited to a particular type(s) of user interface.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (110, 310) for fault propagation in a building automation system (102), comprising:
a memory (334);
a processor (332) configured to execute executable instructions stored in the memory (334) to:
receive an input associated with a fault occurring in the building automation system (102);
execute a fault propagation of the fault using fault rules (104) for the building automation system (102) and causality relationships (108) in a building information model (106) associated with the building automation system (102); and
generate, using the fault propagation of the fault, a fault output (112) with respect to the building automation system (102).

2. The computing device of claim 1, wherein the fault output (112) includes effects of the fault on the building automation system (102).

3. The computing device of claim 1, wherein the fault output (112) includes a root cause of the fault.

4. The computing device of claim 1, wherein the causality relationships (108) define relationships between equipment and system variables associated with the building automation system (102).

5. The computing device of claim 1, wherein the fault rules (104) define a propagation path of a fault among equipment and system variables associated with the building automation system (102).

6. The computing device of claim 1, wherein the processor (332) is configured to execute the instructions to send an alert including the fault output (112).

7. The computing device of claim 1, wherein the input associated with the fault includes an observation of abnormal behavior occurring in the building automation system (102) received from a user.

8. The computing device of claim 1, wherein the input associated with the fault includes an observation of abnormal behavior occurring in the building automation system (102) received from the building automation system (102).

9. The computing device of claim 1, wherein the input associated with the fault includes a fault of equipment associated with the building automation system (102) received from a user.

10. The computing device of claim 1, wherein the input associated with the fault includes at least one of:
a fault of equipment associated with the building automation system (102) received from the building automation system (102); and
a fault of system variables associated with the building automation system (102) received from the building automation system (102).

11. A computer implemented method for fault propagation in a building automation system (102), comprising:
receiving an input associated with a fault occurring in a building automation system (102);
executing a fault propagation of the fault using fault rules (104) for the building automation system (102) and causality relationships (108) in a building information model (106) associated with the building automation system (102); and
generating, using the fault propagation of the fault, a number of effects of the fault on the building automation system (102).

12. The method of claim 11, wherein the method includes generating, using the fault propagation of the fault, a number of root causes of the fault.

13. The method of claim 11, wherein the method includes generating, using the fault propagation of the fault, a number of effects of the fault on equipment and system variables associated with the building automation system (102).

14. The method of claim 11, wherein generating the number of effects of the fault includes deriving consequences of the fault on the building automation system (102) using the causality relationships (108) in the building information model (106).

15. The method of claim 11, wherein the method includes generating the causality relationships (108) utilizing equipment and system variables associated with the building automation system (102) and the building information model (106).
